# EUROPÄISCHE PATENTANMELDUNG

(11) **EP 2 564 696 A1**
(43) Veröffentlichungstag der Anmeldung: **06.03.2013**
(21) Anmeldenummer: 12401174.3
(22) Anmeldetag: 23.08.2012
(51) Int. Cl.: A01M 7/00

(54) **Landwirtschaftliche Feldsprize**

(30) Priorität: 01.09.2011 DE 102011053182
(71) Anmelder: Amazonen-Werke H. Dreyer GmbH & Co. KG, 49205 Hasbergen (DE)
(72) Erfinder: Austermann, Stefan, 48291 Telgte (DE)

(57) **Zusammenfassung**

Landwirtschaftliche Feldspritze mit zumindest einem Flüssigkeitstank (1), einer Pumpe (2), einer Dosierarmatur (3), zumindest einer in den Flüssigkeitstank einmündenden Rücklaufleitung (13) und zumindest einer sich in mehrere Spritzleitungen (6) verzweigenden und zumindest eine Dosierarmatur aufweisenden Druckleitung (5), wobei in der Druckleitung zwischen der Dosierarmatur und der Verzweigung der Druckleitung in die Spritzleitung ein erster Durchflussmesser (14), der mit einem Bordcomputer (16) verbunden ist, angeordnet ist, wobei die Spritzleitungen jeweils zu abschnittsweise zusammengefassten mehrere Ausbringdüsen (8) aufweisenden Ausbringabschnitten eines Verteilergestänges führen, wobei jeweils an der Spritzleitung der einzelnen Ausbringabschnitte jeweils zumindest eine Rücklaufleitung (11) angeschlossen ist, wobei den Rücklaufleitungen zumindest ein einstellbares Ventilelement zugeordnet ist. Um die tatsächliche Ausbringmenge ermitteln zu können, ist vorgesehen, dass den an den Spritzleitungen angeschlossenen Rücklaufleitungen zumindest ein weiterer Durchflussmesser (18), der ebenfalls mit dem Bordcomputer verbunden ist, zugeordnet ist, dass den Ausbringdüsen über eine Fernbedienungseinrichtung ansteuerbare Abschalteinrichtungen (9), die mit dem Bordcomputer verbunden sind, zugeordnet sind, dass durch Differenzbildung der aus den von den Durchflussmesser gelieferten Daten ermittelten Durchflussmenge von dem Bordcomputer die tatsächliche Ausbringmenge ermittelbar ist.

## Beschreibung

Die Erfindung betrifft eine landwirtschaftliche Feldspritze gemäß des Oberbegriffes des Anspruches 1.

Eine derartige Feldspritze ist durch die DE 34 01 734 C2 bekannt. Bei dieser Feldspritze sind auf der den jeweiligen Zuleitungen abgewandten Ende der jeweiligen Spritzleitung jeder Teilbreite Rücklaufleitungen, denen einstellbare Ventilelemente zugeordnet sind, angeordnet. Hierdurch wird erreicht, dass auch bei abgeschalteten Ausbringelementen oder bei niedrigen Durchflussmengen und/oder Ausbringmengen sich keine Ablagerungen in den Spritzleitungen bilden. Somit kann durch einen Durchflussmesser, der den Zuleitungen zu den Spritzleitung zugeordnet wäre, die tatsächliche Ausbringmenge nicht ermittelt werden, weil der Messwert durch die durch die Rücklaufleitungen zurückfließende Flüssigkeitsmenge verfälscht ist.

Der Erfindung liegt die Aufgabe zu Grunde, eine einfache Möglichkeit vorzuschlagen, um dennoch die tatsächliche Ausbringmenge ermitteln zu können.

Diese Aufgabe wird erfindungsgemäß dadurch gelöst, dass den an den Spritzleitungen angeschlossenen Rücklaufleitungen zumindest ein weiterer Durchflussmesser, der ebenfalls mit dem Bordcomputer verbunden ist, zugeordnet ist, dass den Ausbringdüsen über eine Fernbedienungseinrichtung ansteuerbare Abschalteinrichtungen, die mit dem Bordcomputer verbunden sind, zugeordnet sind, dass durch Differenzbildung der aus den von den Durchflussmesser gelieferten Daten ermittelten Durchflussmenge von dem Bordcomputer die tatsächliche Ausbringmenge ermittelbar ist. Infolge dieser Maßnahmen kann durch den Einsatz eines weiteren Durchflussmessers in der Rücklaufleitung durch entsprechende Differenzbildung zu dem ersten Durchflussmesser mittels des Bordrechners in einfacher Weise die tatsächliche Ausbringmenge errechnet werden.

Durch die EP 1 435 200 B1 ist es bekannt einer Rücklaufleitung, die unmittelbar von der einstellbaren Dosierarmatur, welche die tatsächliche Ausbringmenge bestimmt, abzweigt, ebenfalls durch Differenzbildung von den Daten zweier Durchflussmesser die tatsächliche Ausbringmenge bei kleinen Ausbringmenge zu ermitteln.

Um in einfacher Weise die Ausbringdüsen abschalten zu können, ist vorgesehen, dass die Abschalteinrichtungen als vorzugsweise elektrisch ansteuerbare Abschaltventile ausgebildet sind.

Bei einer landwirtschaftlichen Feldspritze, welche eine zentrale Rücklaufleitung von der Dosierarmatur aufweist, ist vorgesehen, dass von der Dosierarmatur eine weitere in den Flüssigkeitstank mündende Rücklaufleitung abzweigt, dass auch dieser Rücklaufleitung ein zusätzlicher Durchflussmesser, der mit dem Bordcomputer verbunden ist, zugeordnet ist, dass auch diese von dem Durchflussmesser im Zusammenhang mit dem Bordcomputer ermittelte Durchflussmenge zur Berechnung der tatsächlichen Ausbringmenge berücksichtigt wird.

Um die einzelnen Rücklaufleitungen, die an den einzelnen Spritzleitungen angeschlossen sind, optimiert auszugestalten, ist vorgesehen, dass die an den Ausbringleitungen angeschlossenen Rücklaufleitungen mittels eines Zwischenelementes zu einer gemeinsamen Rücklaufleitung zusammengefasst sind, und dass in dieser gemeinsamen Rücklaufleitung der weitere Durchflussmesser angeordnet ist.

Weitere Einzelheiten der Erfindung sind der Beispielsbeschreibung und den Zeichnungen zu entnehmen.
Hierbei zeigen
- Fig. 1: einen vereinfachten Flüssigkeitsplan einer Feldspritze in Prinzipdarstellung und
- Fig. 2: einen weiteren vereinfachten Flüssigkeitsplan einer Feldspritze in Prinzipdarstellung.

Die landwirtschaftliche Feldspritze weist u.a. einem Flüssigkeitstank 1 einer motorisch angetriebenen Pumpe 2, eine ein Druckregelventil aufweisende Dosierarmatur 3, welche über einen Stellmotor einstellbar ist, die zu den einzelnen Teilbreiten 4 führende Druckleitung 5, die sich in mehrere Spritzleitungen 6, die den Teilbreiten entsprechen, mittels des Zwischenstückes 7 aufzweigt, die an den einzelnen Spritzleitungen 6 der als Ausbringabschnitte ausgebildeten Teilbreiten 4 angeordneten Ausbringdüsen 8 mit zugeordneten Abschalteinrichtungen 9, die über eine Fernbedienungseinrichtung ansteuerbar sind, auf. Die Abschalteinrichtungen 9 sind als elektrisch ansteuerbare Abschaltventile ausgebildet.

An den Spritzleitungen 6 der einzelnen Teilbreiten 4 sind auf dem der Druckleitung 5 jeweils abgewandten Ende 10 jeweils Rücklaufleitungen 11 angeschlossen, welche mittels eines Zwischenstückes 12 zu einer gemeinsamen Rücklaufleitung 13 zusammengefasst sind.

In der Druckleitung 5 ist zwischen der Dosierarmatur 3 und der Verzweigung 7 der Druckleitung 5 in die Spritzleitungen 6 ein erster Durchflussmesser 14 angeordnet. Dieser erste Durchflussmesser 14 ist über eine Datenübertragungsleitung 15mit dem Bordcomputer 16, ein Display 17 aufweist, verbunden. In der gemeinsamen Rücklaufleitung 13, welche in den Vorratstank 1 ausmündet ist ein weiterer Durchflussmesser 18, der ebenfalls über eine Datenübertragungsleitung 19 mit dem Bordcomputer 16, 17 verbunden ist, angeordnet.

Die Abschalteinrichtungen 9der Ausbringdüsen 8 sind über den als Bordcomputer 16, 17 ausgebildete Fernbedienungseinrichtung ansteuerbar, so dass über die Abschalteinrichtungen 9 die Ausbringdüsen 8 abzuschalten sind, so dass keine Flüssigkeiten mehr ausgebracht werden.

In dem Speicher des Bordcomputers 16, 17 ist ein Programm hinterlegt, mittels welchem durch Differenzbildung der aus den von den beiden Durchflussmessern 14, 18 gelieferten Daten über die jeweils ermittelte Durchflussmenge die tatsächliche Ausbringmenge ermittelt wird.

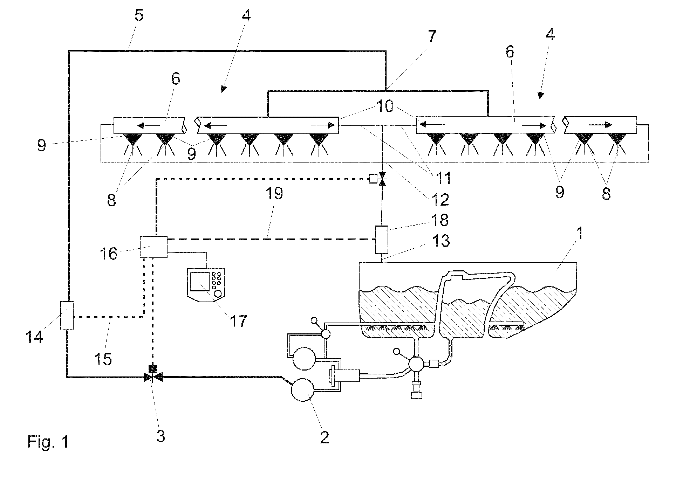

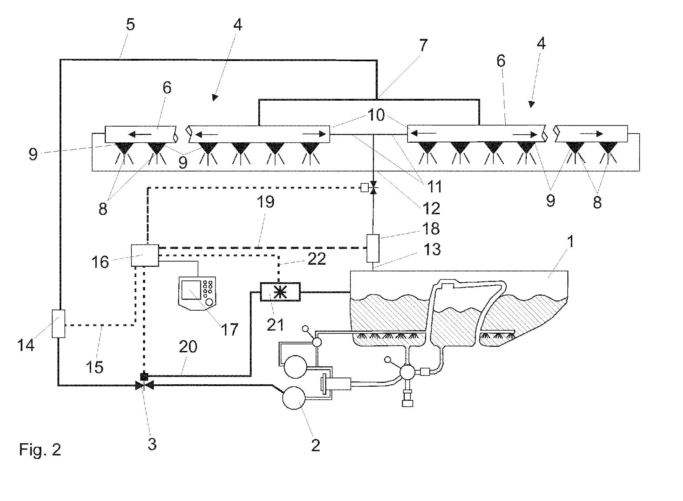

Der Flüssigkeitsplan der Feldspritze gemäß Fig. 2 unterscheidet sich von dem Flüssigkeitsplan gemäß Fig. 1 dadurch, dass der Dosierarmatur 3 eine weitere in den Flüssigkeitstank 1 mündende Rücklaufleitung 20 in abzweigender Weise zugeordnet ist. In dieser zusätzlichen Rücklaufleitung 20 ist ein zusätzlicher Durchflussmesser 21 angeordnet, der ebenfalls über eine Datenübertragungsleitung 22 dem Bordcomputer 16, 17 verbunden ist. Auch die von diesem zusätzlichen Durchflussmesser 21 im Zusammenhang mit dem Bordcomputer 16, 17 ermittelte Durchflussmenge wird zur Berechnung der tatsächlichen Ausbringmenge in diesem Falle berücksichtigt.

## Patentansprüche

1. Landwirtschaftliche Feldspritze mit zumindest einem Flüssigkeitstank, einer Pumpe, einer Dosierarmatur, zumindest einer in den Flüssigkeitstank einmündenden Rücklaufleitung und zumindest einer sich in mehrere Spritzleitungen verzweigenden und zumindest eine Dosierarmatur aufweisenden Druckleitung, wobei in der Druckleitung zwischen der Dosierarmatur und der Verzweigung der Druckleitung in die Spritzleitung ein erster Durchflussmesser, der mit einem Bordcomputer verbunden ist, angeordnet ist, wobei die Spritzleitungen jeweils zu abschnittsweise zusammengefassten mehrere Ausbringdüsen aufweisenden Ausbringabschnitten eines Verteilergestänges führen, wobei jeweils an der Spritzleitung der einzelnen Ausbringabschnitte jeweils zumindest eine Rücklaufleitung angeschlossen ist, wobei den Rücklaufleitungen zumindest ein einstellbares Ventilelement zugeordnet ist, **dadurch gekennzeichnet, dass** den an den Spritzleitungen (6) angeschlossenen Rücklaufleitungen (11, 12) zumindest ein weiterer Durchflussmesser (18), der ebenfalls mit dem Bordcomputer (16, 17) verbunden ist, zugeordnet ist, dass den Ausbringdüsen (9) über eine Fernbedienungseinrichtung (17) ansteuerbare Abschalteinrichtungen (9), die mit dem Bordcomputer (17) verbunden sind, zugeordnet sind, dass durch Differenzbildung der aus den von den Durchflussmessern (14, 18) gelieferten Daten ermittelten Durchflussmenge von dem Bordcomputer (16, 17) die tatsächliche Ausbringmenge ermittelbar ist.

2. Landwirtschaftliche Feldspritze nach Anspruch 1, **dadurch gekennzeichnet, dass** die Abschalteinrichtungen (9) als vorzugsweise elektrisch ansteuerbare Abschaltventile ausgebildet sind.

3. Landwirtschaftliche Feldspritze nach einem oder mehreren der vorstehenden Ansprüche, **dadurch gekennzeichnet, dass** von der Dosierarmatur (3) eine weitere in den Flüssigkeitstank (1) mündende Rücklaufleitung (20) abzweigt, dass auch dieser Rücklaufleitung (20) ein zusätzlicher Durchflussmesser (21), der mit dem Bordcomputer (16, 17) verbunden ist, zugeordnet ist, dass auch diese von dem Durchflussmesser (21) im Zusammenhang mit dem Bordcomputer (16, 17) ermittelte Durchflussmenge zur Berechnung der tatsächlichen Ausbringmenge berücksichtigt wird.

4. Landwirtschaftliche Feldspritze nach einem oder mehreren der vorstehenden Ansprüche, **dadurch gekennzeichnet, dass** die an den Ausbringleitungen (7) angeschlossenen Rücklaufleitungen (11) mittels eines Zwischenelementes (12) zu einer gemeinsamen Rücklaufleitung (13) zusammengefasst sind, und dass in dieser gemeinsamen Rücklaufleitung (13) der weitere Durchflussmesser (18) angeordnet ist.
